# EUROPEAN PATENT APPLICATION

(11) **EP 3 859 018 A1**
(43) Date of publication of application: **04.08.2021**
(21) Application number: 19865864.3
(22) Date of filing: 24.09.2019
(51) Int. Cl.: C21D 9/32, C21D 1/10, C21D 1/18

(54) **HEAT TREATMENT METHOD**

(30) Priority: 28.09.2018 JP 2018186174
(71) Applicant: Delta Kogyo Co., Ltd., Aki-gun, Hiroshima 735-8501 (JP)
(72) Inventor: FUJITA Etsunori, Aki-gun, Hiroshima 735-8501 (JP); YOSHIDA Seiya, Aki-gun, Hiroshima 735-8501 (JP); KUWATA Katsuyoshi, Aki-gun, Hiroshima 735-8501 (JP)
(74) Representative: Hoffmann Eitle
(86) International application number: PCT/JP2019/037208
(87) International publication number: WO 2020/066983

(57) **Abstract**

To reduce the roughening of a surface of a workpiece whose hardness is increased by heat treatment. In a workpiece such as a guide plate (11), not a surface (11a1) of a groove (11a) that is a desired part for hardening (hardening target position) but a surface (11a2) opposite the surface (11a1) is heat-treated as a surface to be heated that is to be directly heated by an induction heating device. This can inhibit the surface (11a1) of the hardening target position from being roughened by the heat treatment and becoming lower in surface precision than before the heat treatment. Further, according to the present invention, the use of the induction heating device makes it possible to heat-treat only a necessary part.

## Description

### Technical Field

The present invention relates to a heat treatment method of hardening a surface of a metal workpiece by heat treatment.

### Background Art

Heat treatment such as quench hardening is applied to, for example, a component constituting a recliner of an automobile seat, gear teeth, and so on to increase their surface hardness. As a surface hardening method, carburizing and quenching, heat treatment using a material having a predetermined carbon content or more, or the like is performed, but in a case where the component is disposed in a furnace to be entirely quench-hardened, a weld zone may become fragile or may be cracked during welding in a post-process. As a countermeasure, a heat treatment method of applying partial heat treatment only to a desired part using an induction heating device is also used. For example, as a heat treatment method of increasing the hardness of gear teeth, Patent Document 1 discloses an art in which a heating coil of an induction heating device is relatively movably provided so as to face the teeth one by one and applies partial heat treatment to only the surface of each of the teeth instead of the whole gear.

### Prior Art Document

### Patent Document

Patent Document 1: Japanese Patent Application Laid-open No. 2016-178016

### Disclosure of the Invention

### Problems to be Solved by the Invention

However, in the case where the heating coil of the heating device is made to face the surfaces of the teeth to heat-treat the surfaces of the teeth, the surfaces may be roughened to decrease in surface precision. This may cause a decrease in engagement precision of the gear or abnormal sound. Further, in a component other than a gear as well, in a case where, for example, a treated surface slides relative to a surface of another component, the roughening of the surface may lead to a decrease in sliding smoothness.

The present invention was made in consideration of the above, and has an object to provide a heat treatment method that heat-treats only a necessary part of a workpiece using induction heating to be capable of making a weld zone less fragile or less likely to crack during welding in a post-process and capable of inhibiting a surface of a part to be hardened (hardening target position) from decreasing in surface precision.

### Means for Solving the Problem

In order to solve the aforesaid problem, the heat treatment method of the present invention is a heat treatment method of heat-treating part of a metal workpiece by induction heating,
wherein a surface of a position different from a surface of a hardening target position out of surfaces of the workpiece is heat-treated as a surface to be heated that is to be directly heated by a heating part of an induction heating device, and the surface of the hardening target position is hardened.

Preferably, the present invention is applied to heat treatment in which the surface of the hardening target position is a machined surface that is machined with a predetermined surface precision.

Preferably, the machined surface is an uneven surface, and a surface opposite the uneven surface is heat-treated as the surface to be heated.

Preferably, the machined surface is an uneven surface, and a surface substantially orthogonal to the uneven surface is heat-treated as the surface to be heated. This case is more preferably applied to a case where the uneven surface is a toothed surface of a gear.

### Effect of the Invention

In the present invention, the surface to be heated that is to be directly heated by the induction heating device is not the surface of the desired part for hardening (hardening target position) but is the surface different from the surface of the hardening target position in the workpiece, and this surface is heat-treated. This can inhibit the surface of the hardening target position from being roughened by the heat treatment and becoming lower in surface precision than before the heat treatment. Further, according to the present invention, the use of the induction heating device makes it possible to heat-treat only a necessary part. Therefore, in a case where welding is performed in a process after the heat treatment, the welding can be performed at a part different from the heat-treated part, enabling the surer welding. Further, since the heat-treated part is partial, an untreated part can absorb distortion, resulting in less residual stress than that in a method of heat-treating the whole workpiece.

### Brief Description of Drawings

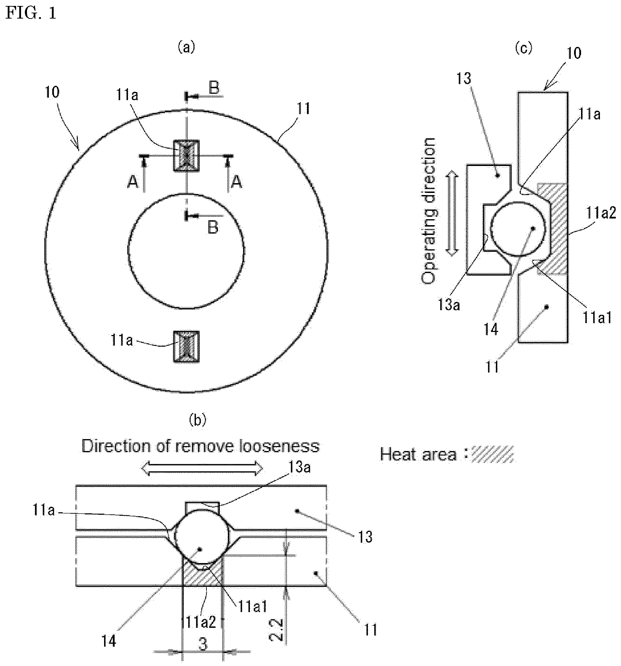

[FIGs. 1] FIGs. 1(a) to (c) are views illustrating essential parts of a recliner, of an automobile seat, that is a workpiece of a first embodiment, FIG. 1(a) being a plan view illustrating a guide plate with locking plates being omitted, FIG. 1(b) being a sectional view taken along the A-A line in FIG. 1(a), and FIG. 1(c) being a sectional view taken along the B-B line in FIG. 1(a).

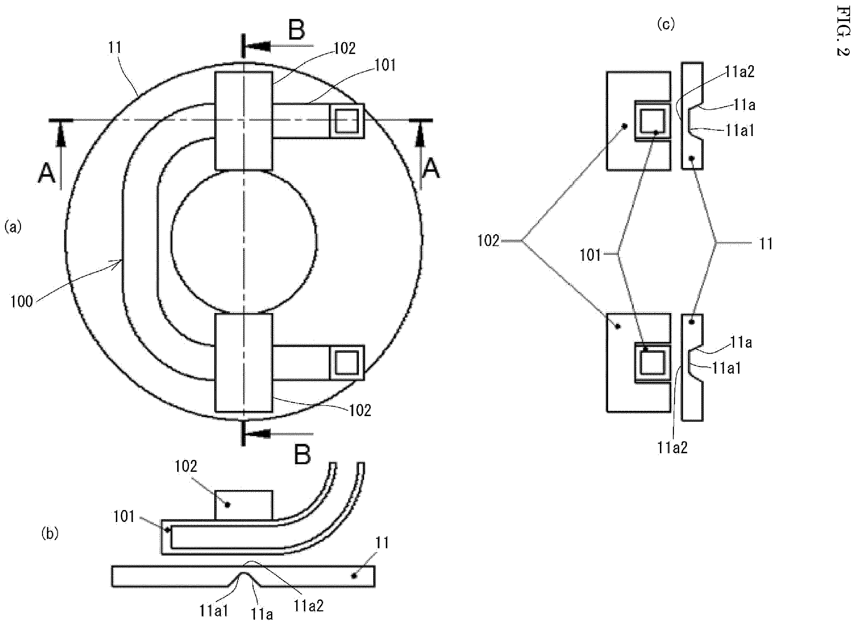

[FIGs. 2] FIG. 2(a) is a plan view illustrating a state in which a heating coil and cores constituting a heating part of an induction heating device are disposed on a rear surface side of the guide plate, FIG. 2(b) is a sectional view taken along the A-A line in FIG. 2(a), and FIG. 2(c) is a sectional view taken along the B-B line in FIG. 2(a).

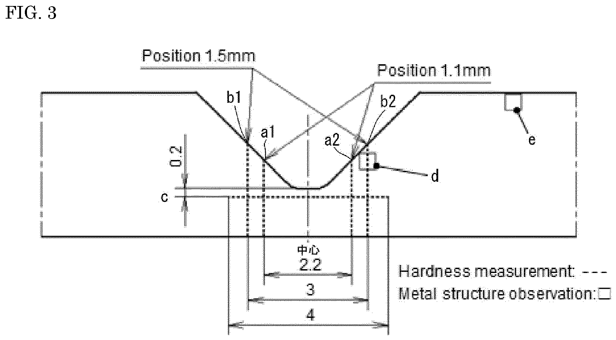

[FIG. 3] FIG. 3 is a sectional view of the guide plate, in which positions for sectional inspection in an experimental example of a first embodiment are indicated.

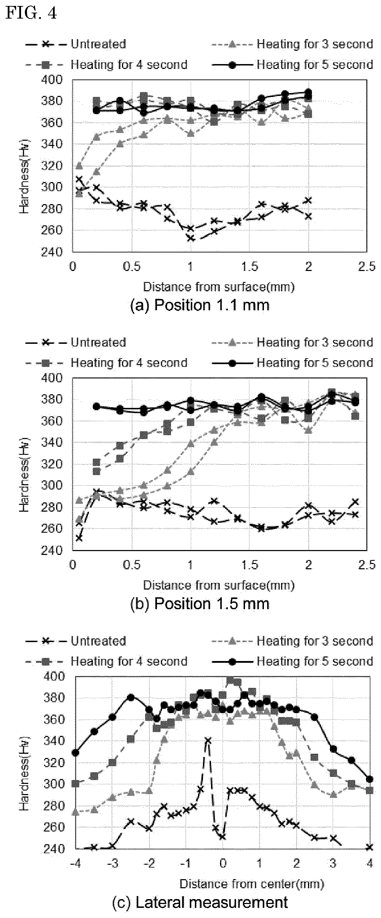

[FIGs. 4] FIG. 4 (a) is a chart illustrating hardnesses at a1, a2 in FIG. 3 under respective conditions, FIG. 4(b) is a chart illustrating hardnesses at b1, b2 in FIG. 3 under the respective conditions, and FIG. 4(c) is a chart illustrating hardnesses in a lateral direction along the c points in FIG. 3.

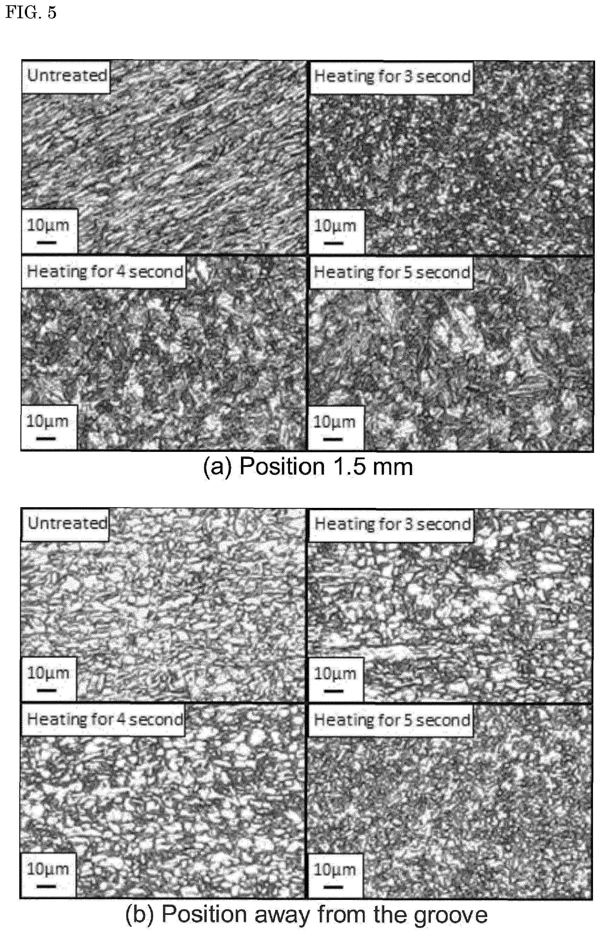

[FIGs. 5] FIG. 5(a) is a view illustrating microstructures in the d area in FIG. 3 under the respective conditions, and FIG. 5(b) is a view illustrating microstructures in the e area in FIG. 3 under the respective conditions.

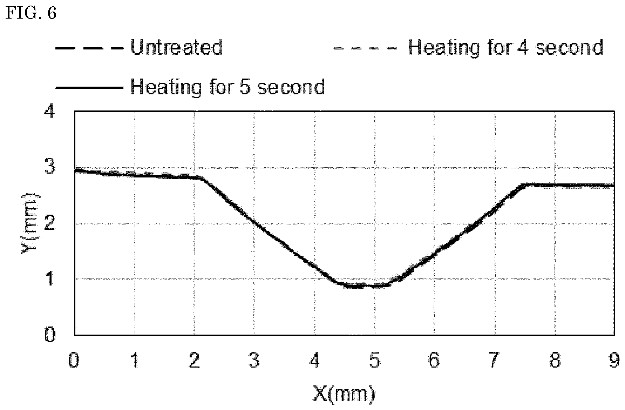

[FIG. 6] FIG. 6 is a chart illustrating the shapes (surface precision) along the surface of the guide plate having been heat-treated under the conditions in the experimental example.

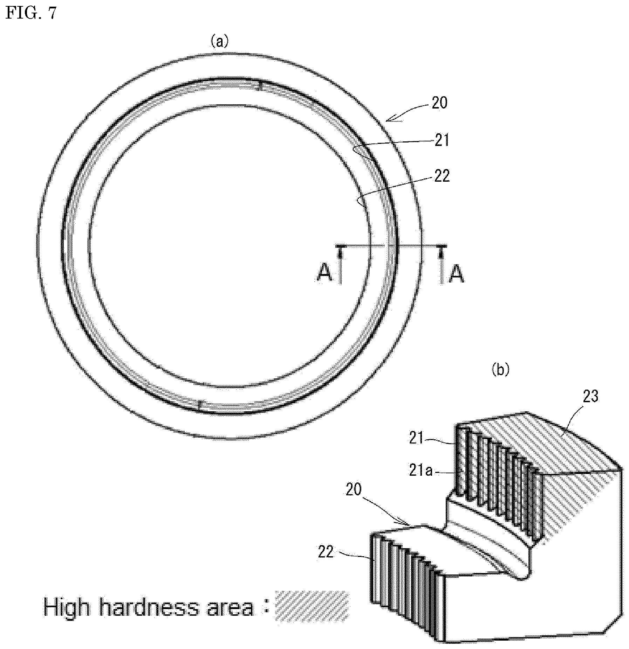

[FIGs. 7] FIG. 7(a) is a plan view illustrating a gear that is a workpiece of a second embodiment, and FIG. 7(b) is a sectional view taken along the A-A line in FIG. 7(a).

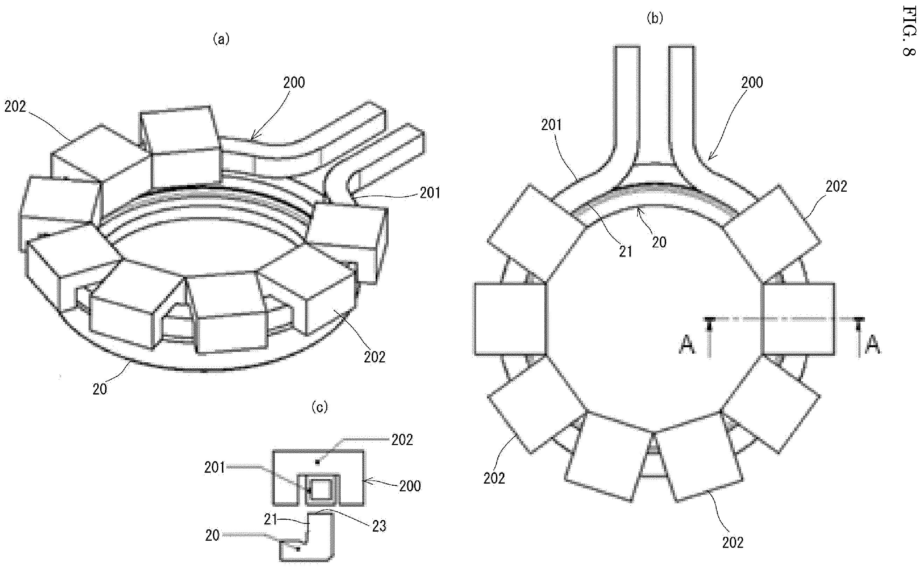

[FIGs. 8] FIG. 8(a) is a perspective view illustrating a state in which a heating coil and cores constituting a heating part of an induction heating device used in the second embodiment are disposed above an upper surface of the gear, FIG. 8(b) is a plan view of FIG. 8(a), and FIG. 8(c) is a sectional view taken along the A-A line in FIG. 8(b).

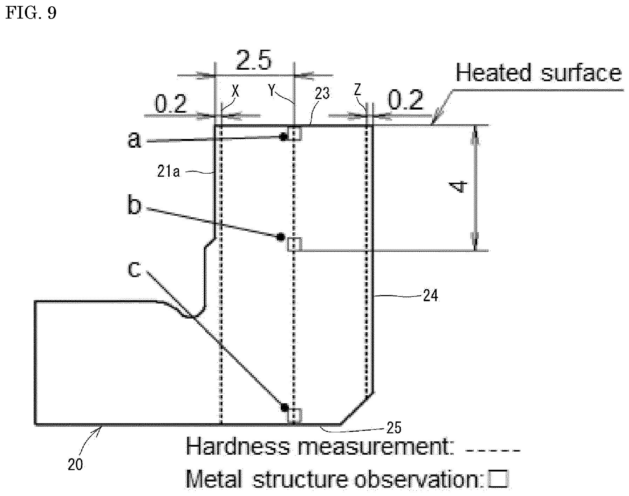

[FIG. 9] FIG. 9 is a sectional view of the gear, in which positions for sectional inspection in an experimental example of the second embodiment are indicated.

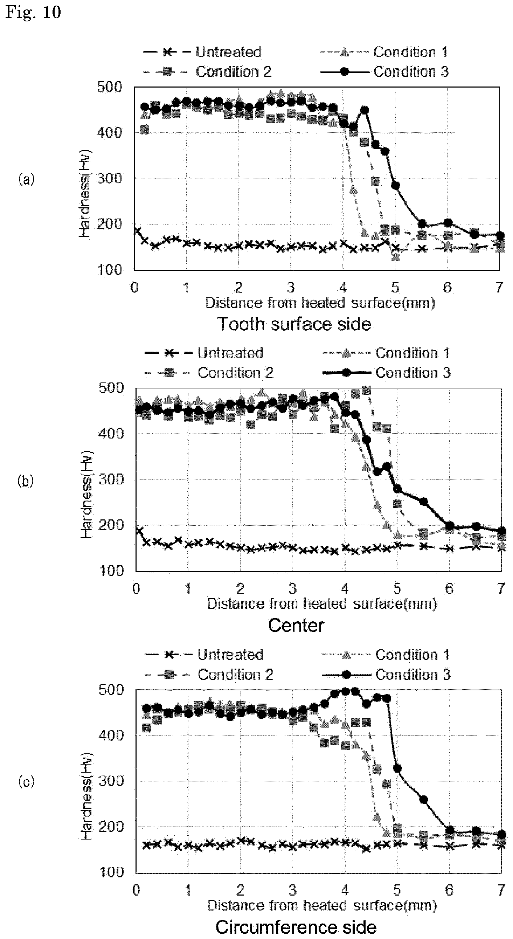

[FIGs. 10] FIG. 10(a) is a chart illustrating hardnesses along the X points in FIG. 9 under respective conditions, and FIG. 10(b) is a chart illustrating hardnesses along the Y points in FIG. 9 under the respective conditions, and FIG. 10(c) is a chart illustrating hardnesses along the Z points in FIG. 9 under the respective conditions.

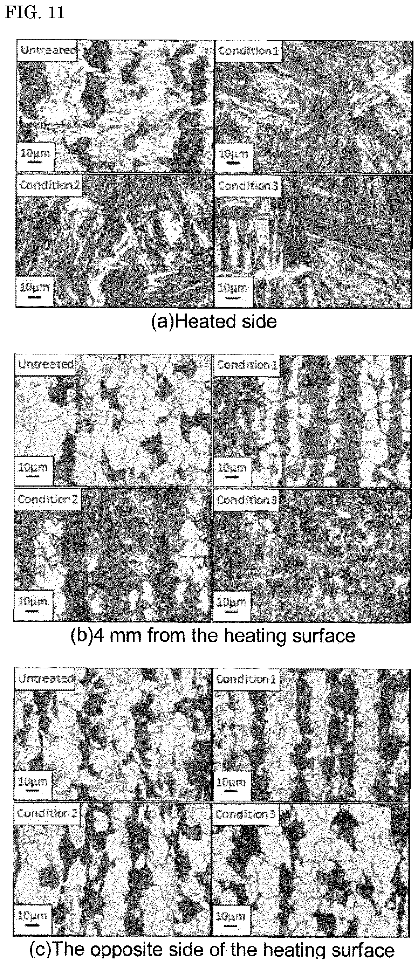

[FIGs. 11] FIG. 11(a) is a view illustrating microstructures in the a area in FIG. 9 under the respective conditions, FIG. 11(b) is a view illustrating microstructures in the b area in FIG. 9 under the respective conditions, and FIG. 11(c) is a view illustrating microstructures in the c area in FIG. 9 under the respective conditions.

### Modes for Carrying out the Invention

The present invention will be hereinafter described in more detail based on embodiments illustrated in the drawings.

### (First Embodiment)

First, an embodiment in which the heat treatment method of the present invention is applied to a recliner 10 of an automobile seat will be described. FIGs. 1(a) to (c) are views illustrating essential parts of the recliner 10, of the automobile seat, that is partially heat-treated using an induction heating device 100. Here, the recliner 10 has a guide plate 11 which is coupled to one of a seat cushion and a seat back of the automobile seat and an internal gear (not illustrated) which is coupled to the other of the seat cushion and the seat back and rotates relative to the guide plate 11. Between the guide plate 11 and the internal gear, a locking plate 13 slidable in a radial direction is provided, and on an outer peripheral surface of the locking plate 13, external teeth (not illustrated) are formed, and the radially outward sliding of the locking plate 13 results in locking due to the engagement of its external teeth with internal teeth of the internal gear, while the radially inward sliding of the locking plate 13 results in their disengagement to allow the guide plate 11 and the internal gear to relatively rotate in accordance with a reclining operation.

Further, in facing surfaces (sliding surfaces) of the guide plate 11 and the locking plate 13, grooves 11a, 13a are formed respectively, and between the grooves 11a, 13a, a sliding ball 14 is disposed to eliminate rattling and improve slidability between the guide plate 11 and the locking plate 13. Note that, in this example, the grooves 11a at two places are formed in the guide plate 11 at a 180-degree interval from each other in a circumferential direction as illustrated in FIG. 1(a), and the number of the locking plates 13, which are not illustrated, is also two corresponding to the grooves 11a.

The guide plate 11 is welded to a frame portion of the seat cushion or the seat back and therefore is made of, for example, SPFH steel with a low carbon content (carbon content: 0.07 to 0.08%), while the locking plates 13 are made of S20CK steel (carbon content 0.2%) that has been carburized, quenched, and tempered. Therefore, on the guide plate 11 side, to reduce deformation due to the sliding balls 14, it is necessary to increase the hardness of the vicinities of ranges where the sliding balls 14 roll, that is, surfaces 11a1 of the grooves 11a of the guide plate 11. The grooves 11a are formed by presswork, and when the grooves 11a are formed as indentations, their peripheries become relatively projected, so that parts including the grooves 11a and their peripheries become machined surfaces formed of uneven surfaces.

In the heat treatment method of this embodiment, a heating coil 101 of the induction heating device 100 is not made to directly face a surface of a part to be hardened (hardening target position) out of surfaces of a metal workpiece to heat this surface but is made to face a surface of a position different from the hardening target position to heat this surface. Therefore, in the workpiece, the surface of the position different from the hardening target position is the surface to be heated that is to be directly heated by the induction heating device 100. In the example in FIGs. 1(a) to (c), the surfaces 11a1 of the grooves 11a of the guide plate 11 are the surfaces of the hardening target positions (the machined surfaces formed by presswork), but the surfaces to be heated are not the surfaces 11a1 but are the surfaces 11a2 opposite the surfaces 11a1. Therefore, the heating coil 101 is made to face the opposite surfaces 11a2 side and ranges up to the surfaces 11a1 are inductively heated (see FIGs. 2(a) to (c)). As a result, the hatched areas in FIGs. 1(a) to (c) are heated.

FIGs. 2(a) to (c) are views illustrating essential parts of the induction heating device 100 used in this embodiment. As illustrated in these drawings, the induction heating device 100 has, as a heating part, the heating coil 101 in a substantially U-shape and cores 102 disposed on the rear side of the heating coil 101 at symmetrical positions corresponding to the formation positions of the grooves 11a of the guide plate 11 and made of a magnetic material to focus magnetic lines. At the time of the heat treatment of the guide plate 11 using this induction heating device 100, the heating coil 101 is first disposed on a rear surface (a surface not having the grooves 11a and including the surfaces 11a2 opposite the grooves 11a) side of the guide plate 11 with the two cores 102 located at the positions corresponding to the two grooves 11a. In this state, an alternating current is passed to the heating coil 101 to heat the guide plate 11 from the rear surface side by induction heating. Since the two cores 102 face the two grooves 11a, the induction heating of the surfaces 11a2 opposite the grooves 11a is promoted to heat the ranges up to the surfaces 11a1 of the grooves 11a. After the heating for a predetermined time, quenching for hardening is performed.

### (Heat treatment experiment on the guide plate 11)

### - Experimental condition

The guide plate 11 (SPFH steel (carbon content: 0.07 to 0.08%)) illustrated in FIGs. 1(a) to (c) was heat-treated, followed by evaluation. The shape of each of the grooves 11a formed in the guide plate 11 was as illustrated in FIG. 1(b), a distance from the surface 11a2 opposite the groove 11a up to contact points between a tapered surface of the groove 11a and the sliding ball 14 in the surface (surface of the hardening target position) 11a1 including a bottom surface and the tapered surface of the groove 11a was 2.2 mm, and a distance between the two contact points of the sliding ball 14 in the cross section in FIG. 1(b) was 3 mm.

The heating coil 101 of the induction heating device 100 was disposed on the rear surface side of the guide plate 11 with the two cores 102 facing the surfaces 11a2 opposite the two grooves 11a (the surfaces of the positions different from the hardening target positions) as described above. The heating time was varied, and the hardness of the grooves 11a was compared. Note that an air gap between the guide plate 11 and the heating coil 101, a power output (the frequency was constant and was set such that the heat permeation distance from the surface 11a2 opposite the grooves 11a toward the surface 11a1 was at least 2.2 mm which is the distance up to the contact points with the sliding ball 14), and a cooling condition were constant.

### - Evaluation method

Sectional inspection (sectional hardness measurement, microstructure observation) and shape measurement in the heat-treated part are conducted. Positions for the sectional inspection are as indicated in FIG. 3. In the hardness measurement, the hardness was measured in the vertical direction from the surface 11a1 toward the opposite surface 11a2, at positions a1, a2 that were 1.1 mm away from the center toward both sides (distance between a1 and a2 2.2 mm) and positions b1, b2 that were 1.5 mm away from the center of the groove 11a toward both sides (distance between b1 and b2 3 mm) in the surface 11a1 of the groove 11a, as indicated in the cross section in FIG. 3. Further, the hardness was measured in the lateral direction along the c points that were 0.2 mm deviated toward the opposite surface 11a2 from the bottom position of the surface 11a1 of the groove 11a, as indicated in the cross section in FIG. 3. FIGs. 4(a) to (c) show the results.

In the microstructure observation, in the section in FIG. 3, in the square-surrounded d area 1.5 mm distant rightward in the drawing from the center of the groove 11a and in the square-surrounded e area more outward than the formation position of the groove 11a and corresponding to a position not facing the heating coil 101, the microstructures were compared. FIGs. 5(a), (b) show the results.

### -Experimental results

From FIG. 4(a), at the positions a1, a2 that were 1.1 mm away from the center, HV360 to 365 was achieved under the condition of four-second heating followed by quenching. From FIG. 4(b), at the positions b1, b2 that were 1.5 mm away from the center, HV360 to 385 was achieved under the condition of five-second heating followed by quenching. As for the hardness in the lateral direction along the c points, a high hardness range is wider as the heating time is longer as illustrated in FIG. 4(c).

As for the microstructure, the d area that is 1.5 mm away from the center which area is within the formation range of the groove 11a comes to have a martensite microstructure under the four-second heating or longer, and the crystal grain size therein is larger under the five-second heating than under the four-second heating as illustrated in FIG. 5(a). The e area outside the groove 11a maintained the same structure as that of the material and thus was not heat-treated as illustrated in FIG. 5(b). Therefore, according to the heat treatment method of this embodiment, the partial heat treatment of only a part facing the heating coil 101 is possible.

The hardness measurement results and the microstructure observation show that a long heating time increases the hardness of even an unnecessary range and makes the crystal grains coarse, leading to fragility. Therefore, it is necessary to pay attention to the heating time so as not to heat-treat a part that is to be welded. Further, a longer processing time leads to poorer production efficiency to increase the cost. Therefore, in this experimental example, the appropriate heating time is from four seconds up to five seconds, and the appropriate heating time that thus enables the efficient heat treatment of only a desired range is preferably decided in advance depending on the shape, thickness, and so on of an object to be processed.

FIG. 6 is a chart illustrating shape lines along the surface 11a1 in the cross section of the groove 11a in the case of the untreatment (Untreated), in the case of the four-second heating followed by the quenching (Heating for 4 second), and in the case of the five-second heating followed by the quenching (Heating for 5 second). As illustrated in the drawing, the shape lines in the cases of the untreatment, the four-second heating followed by the quenching, and the five-second heating followed by the quenching all overlap with one another into substantially one line, from which it is seen that the surface 11a1 of the groove 11a is not roughened by the heat treatment method of this embodiment that is executed with the heating coil 101 being disposed on the opposite surface 11a2 side. That is, the surface 11a1, of the groove 11a, that is the machined surface formed by presswork is hardened while, even after the heat treatment, maintaining surface precision that it has before the heat treatment.

### (Second Embodiment)

Next, an embodiment in which the heat treatment method of the present invention is applied to a metal gear 20 as a workpiece will be described. As illustrated in FIGs. 7(a), (b), the gear 20 used in this embodiment is an internal gear in which teeth 21 being a machined surface (uneven surface) are formed on an inner peripheral surface. As illustrated in FIG. 7(b), the gear 20 has a substantially L-shaped cross section having two up and down steps, and on inner peripheral surfaces of the upper step and the lower step, teeth 21, 22 are formed respectively with their tooth traces substantially along the up-down direction. In this embodiment, an example in which the teeth 21 of the upper step are heat-treated will be described.

In this embodiment, a surface 21a of the teeth 21 being the machined surface (uneven surface) is a surface of a hardening target position, and a surface different from the surface of the hardening target position, that is, a surface (upper surface) 23 disposed to be substantially orthogonal to the surface 21a of the teeth 21 (on an upper end side of the tooth traces of the teeth 21) is heat-treated as a surface to be heated. Specifically, as illustrated in FIG. 8(c), a heating coil 201 constituting a heating part of an induction heating device 200 is disposed to face the upper surface 23 substantially orthogonal to the surface 21a of the teeth 21 to heat the upper surface 23. The upper surface 23 of the gear 20 is substantially circular and as illustrated in FIGs. 8(a), (b), the heating coil 201 is also substantially circular and on the rear side of the heating coil 201, cores 202 constituting the heating part with the heating coil 201 are disposed. Note that the plurality of cores 202 are disposed substantially along the circumference without any gap between the adjacent ones on the inner peripheral edge side.

At the time of heating the upper surface 23 as the surface to be heated, the frequency is adjusted such that the heat from the upper surface 23 permeates up to a position corresponding to lower ends of the teeth 21 extending in a substantially downward direction when seen from the upper surface 23 side. In this embodiment, as illustrated in FIG. 9, the frequency is adjusted so that a range up to a 4 mm depth position from the upper surface 23, which position corresponds to the lower ends of the teeth 21 of the upper step, is induction-heated.

When an alternating current is passed to the induction heating device 200, the heating coil 201 and the cores 202 directly heat the upper surface 23 and the heat permeates up to the 4 mm depth from the upper surface 23. Consequently, the surface 21a of the teeth 21 is also heat-treated, and after the heating for a predetermined time, quenching for hardening is performed.

### (Heat treatment experiment on the gear 20)

### -Experimental condition

The heating coil 201 and the cores 202 of the induction heating device 200 are disposed to face the upper surface 23 of the gear 20 as illustrated in FIG. 8(c), the heating coil 201 and the cores 202 are fixed, and the gear 20 is subjected to heat treatment in which it is heated while rotated in the circumferential direction at 1000 rpm with an air gap of a predetermined distance being kept between the heating coil 201 and the upper surface 23, and thereafter is cooled with 40 L/min air/water composed of water and air.

Then, evaluation was made regarding the following three heating conditions.
Condition 1) Heating time: four seconds, air gap: 1.5mm
Condition 2) Heating time: five seconds, air gap: 2.0 mm
Condition 3) Heating time: five seconds, air gap: 1.5 mm

### - Evaluation method

The evaluation was based on the sectional hardness measurement and microstructure observation of the heat-treated part. In the hardness measurement, the hardness was measured in the vertical direction toward a lower surface 25, with a position in contact with the upper surface 23 being defined as 0 mm, along three places, namely, along the X points that were 0.2 mm outward from a groove bottom of the teeth 21, along the Y points that were 2.5 mm outward from the groove bottom of the teeth 21 (positions along a center line in terms of a direction of a thickness between the groove bottom and an outer peripheral surface 24 of the gear 20), and along the Z points that were 0.2 mm inward from the outer peripheral surface 24 of the gear 20, as indicated in the cross section in FIG. 9. In the microstructure observation, the microstructure was observed in the a area in contact with the upper surface (heated surface) 23, the b area at a position that was 4 mm downward from the upper surface 23, and the c area in contact with the lower surface 25 which areas were along the thickness-wise center line located at the Y points that were 2.5 mm outward from the groove bottom of the teeth 21.

As illustrated in FIGs. 10(a) to (c), under all the conditions (Condition) 1 to 3, at all the positions, the hardness was increased in a range up to the 4 mm depth from the upper surface 23, and the hardness of the untreated part (Untreated) was about HV160 while the hardness after the heat treatment was about HV450. Beyond 4 mm, the hardness gradually decreased, and the hardness became equal to that of the untreated part at a 5 mm depth or more under the condition 1 and the condition 2 and at a 6 mm depth or more under the condition 3.

From the microstructures illustrated in FIGs. 11(a) to (c), under all the conditions, at all the parts, the area a close to the upper surface (heated surface) 23 had a typical martensite (see FIG. 11(a)), and the deeper the area, the finer the crystal grains. The b area that was 4 mm deep from the upper surface (heated surface) 23 had a mixed structure of ferrite and martensite under the conditions 1, 2 and had a fine martensite under the condition 3 (see FIG. 11(b)). The c area not affected by the heat treatment had a ferrite-pearlite structure, which was the same structure as that of the untreated material (see FIG. 11(c)).

From FIGs. 10(a) to (c), it is seen that, under the condition 3, the hardness is increased in a range up to the deepest position, but part of the upper surface (heated surface) 23 melted and fell. Under the condition 1, a hardened range was barely up to the 4 mm depth. Therefore, in this experimental example, the condition 2 in which the heating time was five seconds and the air gap was 2 mm was the most appropriate heating condition.

As described above, in this embodiment, the heating coil 201 and the cores 202 are made to face the upper surface 23 that is the surface substantially orthogonal to the surface on which the teeth 21 are formed, to directly heat the upper surface 23, but as is apparent from FIGs. 10(a) to (c), in the surface 21a of the teeth 21 as well, it was possible to increase the hardness over the range of the up-down direction length of the tooth traces of the teeth 21 (4 mm in this experimental example). Therefore, the surface 21a of the teeth 21 can have a structure having the same machining precision (surface precision) as that before the heat treatment without being roughened as compared with a case where the heating coil 201 and the cores 202 are directly disposed to face the surface 21a to heat the surface 21a. Therefore, the teeth 21 can be inhibited from becoming lower in engagement precision even if their hardness was increased by the heat treatment.

According to the heat treatment method of the present invention, a workpiece having a machined surface that is machined with a predetermined surface precision by presswork or the like, in particular, a thick plate-shaped workpiece having a predetermined thickness such as the aforesaid guide plate 11 or the gear 20 is subjected to the heat treatment in which a surface different from the aforesaid hardening-target machined surface is a surface to be heated that is directly faced by the heating coil 101, 201 and the cores 102, 202 of the induction heating device 100, 200, whereby it is possible to increase the hardness of the machined surface while maintaining the surface precision that the machined surface has before the heat treatment.

### Explanation of Reference Signs

- 10: recliner
- 11: guide plate
- 11a: groove
- 11a1: surface of groove
- 11a2: surface opposite groove
- 13: locking plate
- 13a: groove
- 14: sliding ball
- 100: induction heating device
- 101: heating coil
- 102: core
- 20: gear
- 21: tooth
- 21a: surface of teeth
- 22: tooth
- 23: upper surface
- 200: induction heating device
- 201: heating coil
- 202: core

## Claims

1. A heat treatment method of heat-treating part of a metal workpiece by induction heating,
wherein a surface of a position different from a surface of a hardening target position out of surfaces of the workpiece is heat-treated as a surface to be heated that is to be directly heated by a heating part of an induction heating device, and the surface of the hardening target position is hardened.

2. The heat treatment method according to claim 1, wherein the surface of the hardening target position is a machined surface that is machined with a predetermined surface precision.

3. The heat treatment method according to claim 2, wherein the machined surface is an uneven surface, and a surface opposite the uneven surface is heat-treated as the surface to be heated.

4. The heat treatment method according to claim 2, wherein the machined surface is an uneven surface, and a surface substantially orthogonal to the uneven surface is heat-treated as the surface to be treated.

5. The heat treatment method according to claim 4, wherein the uneven surface is a toothed surface of a gear.
